# EUROPEAN PATENT APPLICATION

(11) **EP 4 568 191 A1**
(43) Date of publication of application: **11.06.2025**
(21) Application number: 24212767.8
(22) Date of filing: 13.11.2024
(51) Int. Cl.: H04L 12/40, H04L 61/5038

(54) **SYSTEM AND METHOD OF AUTOMATIC ID ASSIGNMENT FOR CAN BUS DEVICES**

(30) Priority: 06.12.2023 CN 202311663808
(71) Applicant: NXP USA, Inc., Austin, TX 78735 (US)
(72) Inventor: Jia, Xiaofeng, 5656 AG Eindhoven (NL); Xu, Zhihua, 5656 AG Eindhoven (NL); Chi, Wenguang, 5656 AG Eindhoven (NL); Gao, Zhongyuan, 5656 AG Eindhoven (NL); Liu, Xiaojie, 5656 AG Eindhoven (NL); Wang, Yifan, 5656 AG Eindhoven (NL); Wen, Kang, 5656 AG Eindhoven (NL)
(74) Representative: Schmütz, Christian Klaus Johannes

(57) **Abstract**

A method of assigning a respective controller area network (CAN) ID to each of a plurality of devices, wherein the each of the plurality of devices is coupled with a CAN bus and comprises at least one input and at least one output by which the plurality of devices are connected, in a chain, to a controller of the CAN bus having at least one output, the method comprising: resetting the CAN ID of the each of the plurality of devices to a same initial value; using the at least one output of the controller to set the at least one input of a first device of the plurality of devices to a first value; using the first value to set the CAN ID of the first device; using the at least one output of the first device to set the at least one input of a second device of the plurality of devices to a second value, wherein the second device is connected to the first device; and using the second value to set the CAN ID of the second device. A system of assigning a respective CAN ID to each of a plurality of devices is also presented.

## Description

### BACKGROUND

The present disclosure relates to a system and a method of automatically assigning IDs for CAN bus devices.

More and more battery management systems in electric vehicles or industrial level energy storage systems utilize Controller Area Network (CAN) protocol for building their communication infrastructures. In systems with CAN buses, assigning IDs for CAN nodes significantly impacts production and assembly efficiency, together with application and maintenance flexibility.

CAN IDs can be manually configured by DIP switches. However, manually switching the DIP switches becomes inapplicable if there are a large number (more than 8) of CAN nodes. Configuring CAN ID one by one by hand will lead to higher error rates and is inefficient.

In solutions of automatic assigning, fixed CAN ID is programed into the device in the production phase. In production and system assembly, a unique CAN ID should be downloaded to every device, and the device should be installed to the specific location according to its unique CAN ID. By such, there is inability of standardizing the production. The CAN ID is unchangeable. At the same time, system maintenance will be complicated because of the fixed CAN ID.

Automatic CAN ID assignment has been implemented, including arbitrating addresses by the speed of preceding nodes for sending messages, or assigning and arbitrating addresses based on random generators, etc. However, the time for such automatic CAN ID assignment is long (typically more than 1 second); in contrast, initialization of some systems, such as battery management system, may be required in less than 500ms.

The automatic CAN ID assignment for multiple devices may be implemented by introducing a slave microcontroller chip in each device subsystem which waits until a device CAN ID is assigned. Each slave microcontroller is configured to communicate with a master microcontroller via CAN bus, adding the complexity and cost.

Therefore, a technique is needed to provide a system for automatic CAN ID assignment for a large number of CAN nodes with a good real-time performance, while removing the microcontroller chip in device subsystem for improving system integration and saving cost.

### SUMMARY

This summary is provided to introduce a selection of concepts in a simplified form that are further described below in the Detailed Description. This summary is not intended to identify key or essential features of the claimed subject matter, nor is it intended to be used to limit the scope of the claimed subject matter.

In accordance with a first aspect of the present disclosure, a method of assigning a respective controller area network (CAN) ID to each of a plurality of devices is provided, wherein the each of the plurality of devices is coupled with a CAN bus and comprises at least one input and at least one output by which the plurality of devices are connected, in a chain, to a controller of the CAN bus having at least one output, the method comprising: resetting the CAN ID of the each of the plurality of devices to a same initial value; using the at least one output of the controller to set the at least one input of a first device of the plurality of devices to a first value; using the first value to set the CAN ID of the first device; using the at least one output of the first device to set the at least one input of a second device of the plurality of devices to a second value, wherein the second device is connected to the first device; and using the second value to set the CAN ID of the second device.

In one or more embodiments, the second value is different from the first value.

In one or more embodiments, setting the CAN ID of the first device and setting the CAN ID of the second device each further comprises the controller instructing any devices having the same initial value of CAN ID to reset.

In one or more embodiments, the at least one input of the each of the plurality of devices is a respective plurality of M ID ports configured to receive an M-bit value corresponding to a binary value at each ID port, the at least one output of the each of the plurality of devices is a respective plurality of M general-purpose input/output (GPIO) terminals configured to output an M-bit value corresponding to a binary value at each GPIO terminal, and wherein, using the at least one output of the first device to set the at least one input of a second device of the plurality of devices to a second value comprises the controller instructing the first device to output, at the M GPIO terminals, a value which is one greater than the value of the CAN ID of the first device.

In one or more embodiments, setting the CAN ID of an (N+1)th device along the chain comprises the controller instructing the Nth device along the chain to output, at the M GPIO terminals of the Nth device, a value which is one greater than the value of the CAN ID of the Nth device.

In one or more embodiments, the at least one input is a first input and the at least one output is a first output, and wherein the each of the plurality of devices comprises a plurality of further outputs and a plurality of further inputs, and each of the plurality of further outputs is electrically connected to a respective one of the plurality of further inputs.

In one or more embodiments, setting the CAN ID of the first device further comprises: after using the at least one output of the controller to set the at least one input of a first device of the plurality of devices to a first value, the controller instructing any devices having the same initial value of CAN ID to reset, the controller instructing any devices having the first value of the first input to output a third value at its plurality of further outputs, thereby applying the third value to its plurality of further inputs, and the controller instructing any devices having the first value of the first input to reset; and setting the CAN ID of the second device comprises: after using the at least one output of the first device to set the at least one input of a second device of the plurality of devices to a second value, the controller instructing any devices having the same initial value of CAN ID to reset, the controller instructing any devices having the second value of the first input to output a fourth value at its plurality of further outputs, thereby applying the fourth value to its plurality of further inputs, and the controller instructing any devices having the second value of the first input to reset.

In one or more embodiments, the second value is equal to the first value, and wherein the fourth value is different from the third value.

In one or more embodiments, each of the plurality of further outputs is connected to a respective one of the plurality of further inputs by way of a latch.

In accordance with a second aspect of the present disclosure, a system of assigning a respective controller area network (CAN) ID to each of a plurality of devices is provided, the system comprising: the each of the plurality of devices being coupled with a CAN bus; and a controller of the CAN bus having at least one output, wherein the each of the plurality of devices comprises at least one input and at least one output by which the plurality of devices are connected, in a chain, to the controller; wherein the CAN ID of the each of the plurality of devices is reset to a same initial value after the system is powered on; wherein the at least one output of the controller is used to set the at least one input of a first device of the plurality of devices to a first value, and the first value is used to set the CAN ID of the first device; wherein the at least one output of the first device is used to set the at least one input of a second device of the plurality of devices to a second value, and the second value is used to set the CAN ID of the second device, wherein the second device is connected to the first device.

In one or more embodiments, setting the CAN ID of the first device and setting the CAN ID of the second device each further comprises the controller instructing any devices having the same initial value of CAN ID to reset.

In one or more embodiments, the at least one input of the each of the plurality of devices is a respective plurality of M ID ports configured to receive an M-bit value corresponding to a binary value at each ID port, the at least one output of the each of the plurality of devices is a respective plurality of M general-purpose input/output (GPIO) terminals configured to output an M-bit value corresponding to a binary value at each GPIO terminal, and wherein, setting the at least one input of a second device of the plurality of devices to a second value comprises the controller instructing the first device to output, at the M GPIO terminals, a value which is one greater than the value of the CAN ID of the first device.

In one or more embodiments, the CAN ID of an (N+1)th device along the chain is set by the controller instructing the Nth device along the chain to output, at the M GPIO terminals of the Nth device, a value which is one greater than the value of the CAN ID of the Nth device.

In one or more embodiments, the at least one input is a first input and the at least one output is a first output, and wherein the each of the plurality of devices comprises a plurality of further outputs and a plurality of further inputs, and each of the plurality of further outputs is electrically connected to a respective one of the plurality of further inputs.

In one or more embodiments, setting the CAN ID of the first device further comprises: after using the at least one output of the controller to set the at least one input of a first device of the plurality of devices to a first value, the controller instructing any devices having the same initial value of CAN ID to reset, the controller instructing any devices having the first value of the first input to output a third value at its plurality of further outputs, thereby applying the third value to its plurality of further inputs, and the controller instructing any devices having the first value of the first input to reset; and setting the CAN ID of the second device comprises: after using the at least one output of the first device to set the at least one input of a second device of the plurality of devices to a second value, the controller instructing any devices having the same initial value of CAN ID to reset, the controller instructing any devices having the second value of the first input to output a fourth value at its plurality of further outputs, thereby applying the fourth value to its plurality of further inputs, and the controller instructing any devices having the second value of the first input to reset.

### BRIEF DESCRIPTION OF THE DRAWINGS

So that the manner in which the above recited features of the present disclosure can be understood in detail, a more detailed description of the disclosure may be had by reference to embodiments, some of which are illustrated in the appended drawings. The appended drawings illustrate only typical embodiments of the disclosure and should not limit the scope of the disclosure, as the disclosure may have other equally effective embodiments. The drawings are for facilitating an understanding of the disclosure and thus are not necessarily drawn to scale. Advantages of the subject matter claimed will become apparent to those skilled in the art upon reading this description in conjunction with the accompanying drawings, in which like reference numerals have been used to designate like elements, and in which:
FIG. 1 is a simplified block diagram depicting the concept of the proposed system for automatic ID assignment in accordance with the present disclosure;
FIG. 2 is a simplified flow chart describing a method of automatic ID assignment for CAN bus devices in accordance with the present disclosure;
FIG. 3 is a block diagram depicting a first embodiment of the proposed system for automatic ID assignment in accordance with the present disclosure;
FIG. 4 is a flow chart describing a method of automatic ID assignment for CAN bus devices in accordance with the first embodiment of the present disclosure;
FIG. 5 is a block diagram depicting a second embodiment of the proposed system for automatic ID assignment in accordance with the present disclosure;
FIG. 6 is a flow chart describing a method of automatic ID assignment for CAN bus devices in accordance with the second embodiment of the present disclosure.

### DETAILED DESCRIPTION

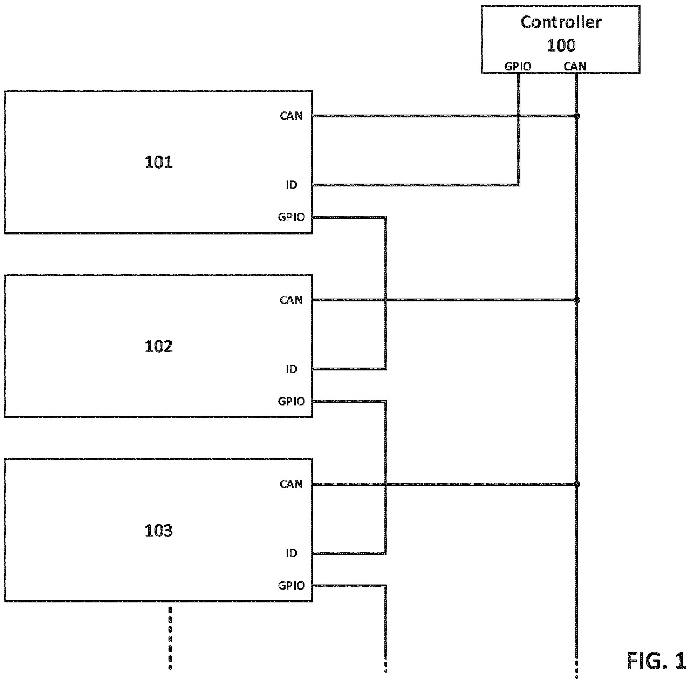

FIG. 1 is a simplified block diagram depicting the concept of the proposed system for automatic ID assignment in accordance with the present disclosure. As shown in Figure 1, the system for the solution includes multiple devices (e.g., 101, 102 and 103) waiting to be assigned a respective unique CAN ID. The system includes a controller 100 to which each device is coupled with via a CAN bus. The controller 100 is configured to communicate to and from each device using CAN protocols. The controller 100 may be implemented by way of a Microcontroller Unit (MCU), a Microprocessor Unit (MPU) or other controller units known by the skilled person. The skilled person will appreciate that the controller may communicate with each device using CAN protocols via a CAN transceiver which is connected between the CAN bus and the respective each device or the CAN transceiver may be embedded into the device so that the controller may communicate with each device using CAN protocols via the CAN bus directly. The controller 100 further comprises one or more General Purpose Input/Output (GPIO) terminals to configure one or more ID ports of a first device 101 of the multiple devices. The first device 101 further comprises one or more GPIO terminals which are connected to one or more ID ports of a second device 102 of the multiple devices. The one or more GPIO terminals of the first device 101 are configured as outputs and are used for configuring one or more ID ports of a second device 102. The one or more GPIO terminals of the second device 102 are configured as outputs and are used for configuring one or more ID ports of a third device 103. It is envisioned that any other input/output terminals other than GPIO terminals are also preferred in the embodiments. Also, only one function of input and output functions may be needed for the terminals of the controller and the multiple devices.

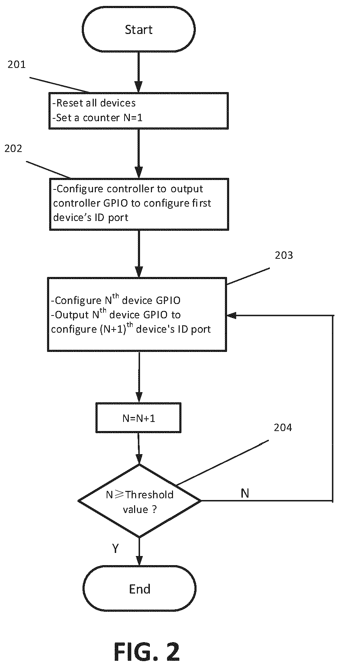

FIG. 2 is a simplified flow chart describing a method of automatic ID assignment for CAN bus devices in accordance with the present disclosure. The method will be described with reference to the system of FIG. 1.

At step 201, the controller 100 sends CAN signals to all the devices 101, 102 and 103 on the CAN bus, to reset these devices, when the system is powered on. The CAN IDs, i.e., the one or more ID ports of all the devices are set to a same initial value. A counter with the count N=1 is set. At step 202, the one or more GPIO terminals of the controller 100 output signals to the first device 101 to set the one or more ID ports of the first device in order to assign the CAN ID of the first device. At step 203, the one or more GPIO terminals of the N^{th} device (which is the first device 101 as the current count N=1) output signals to the (N+1)^{th} device (which is the second device 102 as the current count N=1) to set the one or more ID ports of the (N+1)^{th} device in order to assign the CAN ID of the (N+1)^{th} device. The count N is then incremented, and the method proceeds to step 204. At step 204, it is determined whether the count N has reached a threshold value. The threshold value may, for instance, be the number of devices on the bus, if that is known. Alternatively, it may be the maximum possible, for word-size of the CAN ID (for example if the CAN-ID is a four-bit word, it would be 15; if the CAN ID is a 3-bit word, it would be 7, etc.). If the count N is smaller than the threshold value, the method loops back to step 203, where CAN ID of the (N+1)^{th} device will be configured from the GPIO terminals of the N^{th} device. If the count N reaches the threshold value, the method ends. Preferred embodiments of the proposed solution for automatic ID assignment in accordance with the present disclosure will be described in detail below.

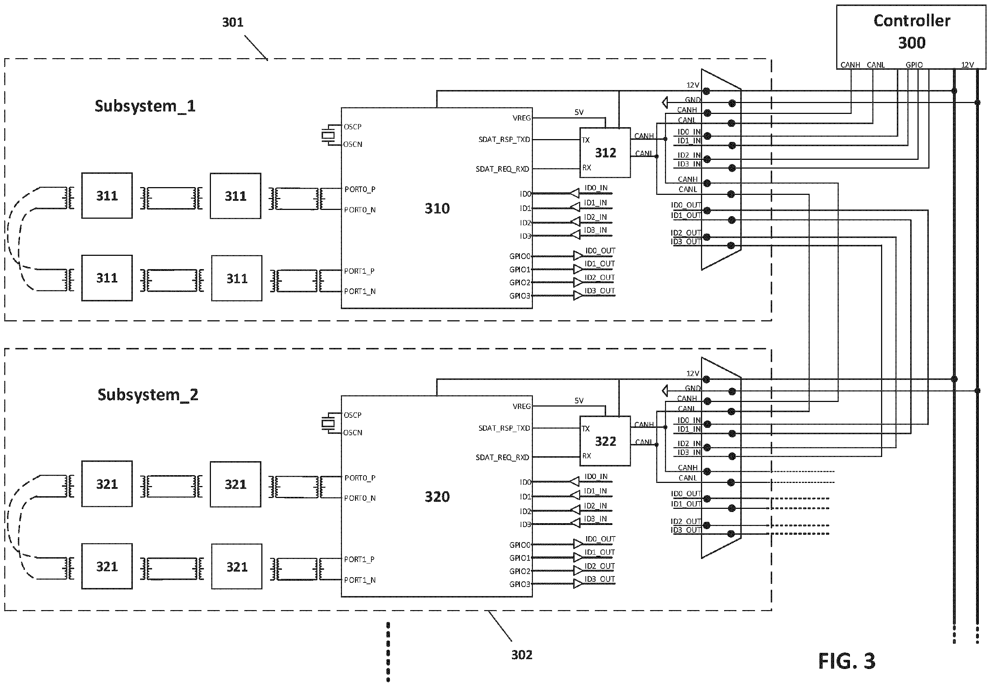

FIG. 3 is a block diagram depicting a first embodiment of the proposed system for automatic ID assignment in accordance with the present disclosure. As shown in Figure 3, the system for the automatic ID assignment solution includes multiple subsystems 301 and 302. The system includes a controller 300 to which each subsystem is connected via a CAN bus.

The controller 300 provides a 12V power supply to low voltage zones of the subsystems. The controller 300 is configured to communicate to and from each subsystem using CAN protocols. The controller 300 may be implemented by way of a Microcontroller Unit (MCU), a Microprocessor Unit (MPU) or other controller units known by the skilled person. In the embodiment illustrated in Figure 3, the controller 300 further comprises 4 GPIO terminals configured as outputs of the controller.

Each subsystem comprises a device (e.g., 310, 320), a transceiver (e.g., 312, 322), and one or more analog front ends (AFEs) (e.g., 311, 321). The device 310 or 320 is typically implemented as a gateway or a transceiver, and is in need of being assigned with a corresponding unique ID when the system initiates.

The AFEs 311 and 321 may include battery monitoring modules having monitor chips for sensing the voltage and temperature of battery cells, e.g., in electric vehicles or industrial level energy storage systems. The AFEs 311, 321 are configured to communicate with the device 310, 320 by daisy chain. As shown in Figure 3, the AFEs 311, 321 are arranged in a connection as a loop back daisy chain. Other possible connection relationships between the AFEs and the device, such as single daisy chain, etc., are also applicable, as will be familiar to the skilled person, and are intended to be encompassed within the present disclosure.

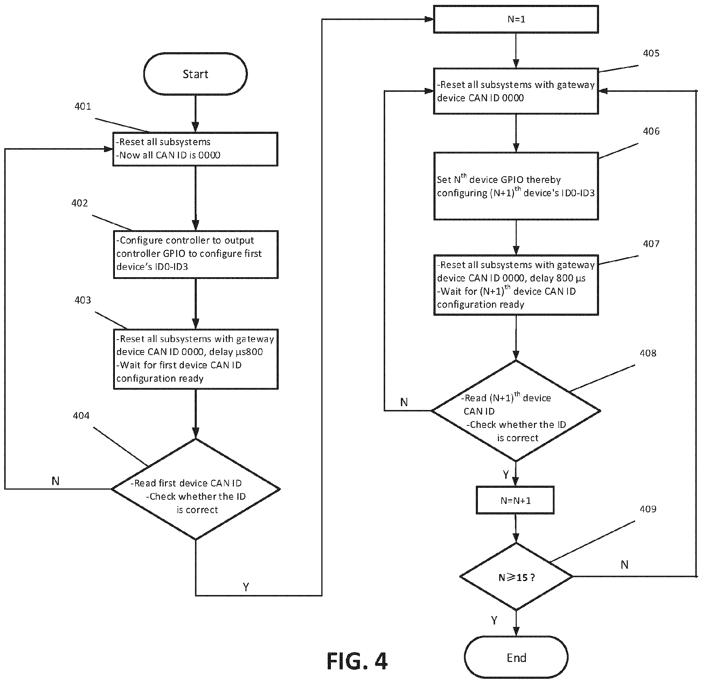

The gateway device 310 comprises 4 daisy chain communication ports to connect with the AFEs 311. In the embodiment illustrated in Figure 3, the gateway device 310 further comprises 4 General Purpose Input/Output (GPIO) terminals and 4 ID ports. The 4 GPIO terminals of the controller 300 are configured to output signals to the ID ports ID0 to ID3 of the gateway device 310. The 4 ID ports ID0-ID3 are configured for receiving a 4-bit signal with each carrying one bit when used in CAN ID assignment. The CAN ID length of the gateway device 310 is thus 4 bits. The assigned CAN ID can be stored in a register of the gateway device by retrieving data from the ID ports. The skilled person will appreciate that, in conventional CAN devices, such ID ports may be connected to "DIP" switches, which can be manually set so as to assign a CAN ID to the device when the device is installed in a system. In embodiments of the present disclosure, however, the ID ports are connected differently: in particular according to the embodiment shown in Figure 3, the 4 GPIO terminals GPIO0-GPIO3 of the gateway device 310 are configured as outputs and are used for configuring the ID ports ID0 to ID3 of the gateway device 320 of a next subsystem 302. A permanent and constant 5V signal from a GPIO terminal to a respective ID port characterizes the change of logic from "0" to "1" at the respective ID port. In other words, the 4 GPIO terminals are configured as a 4-bit parallel output port, and the 4 ID ports are configured as a 4-bit parallel input port, as will be described in more details with reference to Figure 4. It is envisioned that the GPIO terminals and the ID ports may, in some embodiments, be useable for additional purposes other than the described CAN ID assignment purpose.

The gateway device 310 communicates with the controller 300 via CAN bus by way of the transceiver 312. As shown, a 5MHz external crystal oscillator may be provided for the gateway device 310 to support its communication through the CAN bus. The transceiver 312 is a CAN signal transceiver, which is configured to output CAN_HIGH (CANH) and CAN_LOW (CANL) signals. The differential voltage on the pair of CANH and CANL signal characterizes the logic signal from the controller to the gateway device. It is envisioned that the transceiver 312 can either be a separate chip or embedded in the gateway device 310.

It will be appreciated that the system of FIG. 3 may include more subsystems, depending on an allowable number as defined by the length of the CAN ID which is assigned from the controller 300.

FIG. 4 is a flow chart describing a method of automatic ID assignment for CAN bus devices in accordance with the first embodiment of the present disclosure. The method will be described with reference to the system of FIG. 3.

All systems are initiated at the beginning, including all subsystems, the controller 300 and other modules are powered on. At step 401, reset all subsystems 301 and 302. The CAN IDs, i.e., ports ID0 to ID3 of all the gateway devices are set to "0000". In the first embodiment, the controller 300 sends CAN signals to all the subsystems on the CAN bus, to reset these subsystems, when the system is powered on.

At step 402, the GPIO terminals of the controller 300 output signals to the first subsystem 301. The controller GPIO terminals output signals ID0_IN to ID3_IN to the first subsystem 301 to configure, respectively, the port ID0 of the first gateway device 310 to "1", the port ID1 of the first gateway device to "0", the port ID2 of the first gateway device to "0", and the port ID3 of the first gateway device to "0". Thus, the CAN ID of the first gateway device is ready to be set from "0000" to "0001".

As shown in Figure 3, one possible implementation is using 4 wires to directly connect the controller GPIO terminals and ports ID0 to ID3 of the first gateway device 310. In this manner, changing the signal level on the pins of the ID ports via the wires will result in the change of value of the ID ports. As described, the permanent and constant 5V signal from the controller GPIO terminal to the respective ID port characterizes the change of logic from "0" to "1". It is envisioned that other possible GPIO signaling methods could be used. It will be appreciated that thus setting the values at the ID ports does not, by itself, establish the CAN ID of the device: rather, that generally only occurs when the value is read into, and stored, which typically occurs whenever the device is reset.

At step 403, the controller 300 sends CAN signals to those subsystems with gateway device CAN ID "0000", to reset these subsystems. As already mentioned, for a typical gateway device, a reset action is needed for updating its CAN ID, from the values at the ID ports. A delay time (which for some implementation may be at least 800µs) is introduced to meet the minimum demands of resetting a typical gateway device. If the gateway device loses power supply, then it will lose its configured ID and reset its ID to "0000" (or whatever value may then exist across its ID ports). At step 403, it may include a further wait time, or delay, until configuration of the CAN ID of the first gateway device to "0001" is ready and finished.

At step 404, the CAN ID of the first gateway device 310 is read to check whether the ID configured in step 403 is correct. That is to say, the current CAN ID of the first gateway device 310, which should now be "0001", is checked with device IDs of any other gateway device of each subsystem. As a preferred implementation, the controller requests all the gateway devices to return their IDs and check whether the current CAN ID of the first gateway device is identical with any previously configured ID. It is envisioned that other duplicate ID checking method can also be applicable to the solution. If ID "0001" is already used, i.e., identical to any other device ID, due to the reason such as failure of resetting some subsystems at the beginning, etc., the method will loop back to step 401, where CAN ID of all gateway devices will be reset to "0000" and the system will restart the automatic ID assignment process.

If, with step 404, the current CAN ID "0001" of the first gateway device 310 is correct, the method proceeds on to a loop procedure for assigning CAN IDs for the other gateway devices. The count will start at N=1 as ID of the first gateway device 310 has already been assigned.

At step 405, the controller sends CAN signals to those subsystems with gateway device CAN ID "0000", to reset these subsystems.

At step 406, the controller sends CAN signals to the first gateway device 310, whose CAN ID is already assigned as "0001", instructing the first gateway device 310 to output signals ID0_OUT to ID3_OUT respectively from its GPIO0 to GPIO3, to the second subsystem 302, to correspondingly configure ports ID0 to ID3 of the second gateway device 320 from "0000" to "0010". As shown in Figure 3, in the implementation of the embodiment, this is done using 4 wires to directly connect GPIO terminals of the first gateway device 310 and ID ports of the second gateway device 320. It is envisioned that other possible GPIO signaling methods can be applicable.

At step 407, the controller sends CAN signals to those subsystems with gateway device CAN ID "0000", to reset these subsystems. A delay (typically of a minimum of 800µs) is introduced. For step 407, the second subsystem waits until the configuration of CAN ID of the second gateway device 320 to "0010" is finished.

At step 408, the CAN ID of the second (or more generally, the "(N+1)^{th}") gateway device is retrieved (or read out) to check whether the CAN ID configured in step 407 is correct. That is to say, for the first time in the loop, the current CAN ID of the second gateway device 320, which should now be "0010", is checked against device IDs of any other gateway device of each subsystem. As a preferred implementation, the controller requests all the gateway devices to return their IDs and check whether the current CAN ID of the second gateway device is identical with any previously configured ID. It is envisioned that other duplicate ID checking method can also be applicable to the solution. If ID "0010" is already used, i.e., identical to any other device ID, due to the reason such as failure of resetting some subsystems at the beginning, etc., the method will loop back to step 405, where the controller sends CAN signals to all the subsystems, whose gateway device CAN ID is currently "0000", to reset these subsystems. Then CAN ID of the second gateway device 320 will be configured again from step 406 as described above.

At step 408, if ID "0010" of the second gateway device 320 is determined to be correct (or the corresponding ID "N+1" for the N^{th} device, considering later travels round the loop), the count N is incremented, and the method proceeds to step 409. At step 409, it is determined whether the count N has reached a threshold value, which may be preconfigured as 15 as shown in Figure 4. If the count N is smaller than the threshold value, the method loops back to step 405, where the controller 300 sends CAN signals to those subsystems with gateway device CAN ID "0000", to reset these subsystems. CAN ID of the (N+1)^{th} gateway device will be configured from the GPIO terminals of the N^{th} gateway device. If the count N reaches the threshold value, the method ends, which means, in the case that the threshold is 15, ID "1111" has been assigned to the last gateway device of the last subsystem and gateway devices of all the 15 subsystems have been assigned a respective CAN ID from "0001" to "1111".

It should be noted that, in the first embodiment, although the first gateway device is working as a passive device that needs CAN signal instruction from the controller to output signals from its GPIO terminals to the second gateway device, it is envisioned that, introducing the first gateway device as a more active and intelligent device into the subsystem will allow the first gateway device to automatically assign ID for the next gateway device by receiving instructions from the controller only one time throughout the whole solution.

It should also be noted that the number of GPIO terminals and ID ports introduced, the number of gateway devices (subsystems) to be assigned ID, and the combination of ID values, may each be determined by user selection or by a system designer.

In the embodiment illustrated in Figure 3, 4 ID ports are introduced in the solution for each gateway device which means the CAN ID length of the gateway device is 4 bits and the maximum allowable number of gateway devices (subsystems) should be 15 as "0000" should be kept as an initial ID value for all the gateway devices. However, a different number of GPIO terminals and ID ports will result in a different number of bits of the CAN ID length. That means, a number of more than 15 subsystems is also applicable. For example, 5 GPIO terminals and 5 ID ports in the gateway devices in the first embodiment of FIG. 3 will allow a maximum number of 31 subsystems in the system for automatic ID assignment.

Also, although 15 is preconfigured as the threshold value of the count N for the solution in the first embodiment, any number less than 15 is applicable for the solution when 4 GPIO terminals and 4 ID ports are introduced in the solution.

Although ID from "0001" to "1111" is preconfigured as the CAN ID of the gateway devices for the solution in the first embodiment, any group of ID number matching the threshold value of the count N is applicable for the solution. For example, if 7 subsystems are present for ID assignment, (0001, 0011, 0100, 0101, 0110, 0111, 1111) is a possible ID combination. If 11 subsystems are present for ID assignment, (0001, 0010, 0011, 0100, 0101, 0110, 0111, 1001, 1010, 1100, 1110) is a possible ID combination.

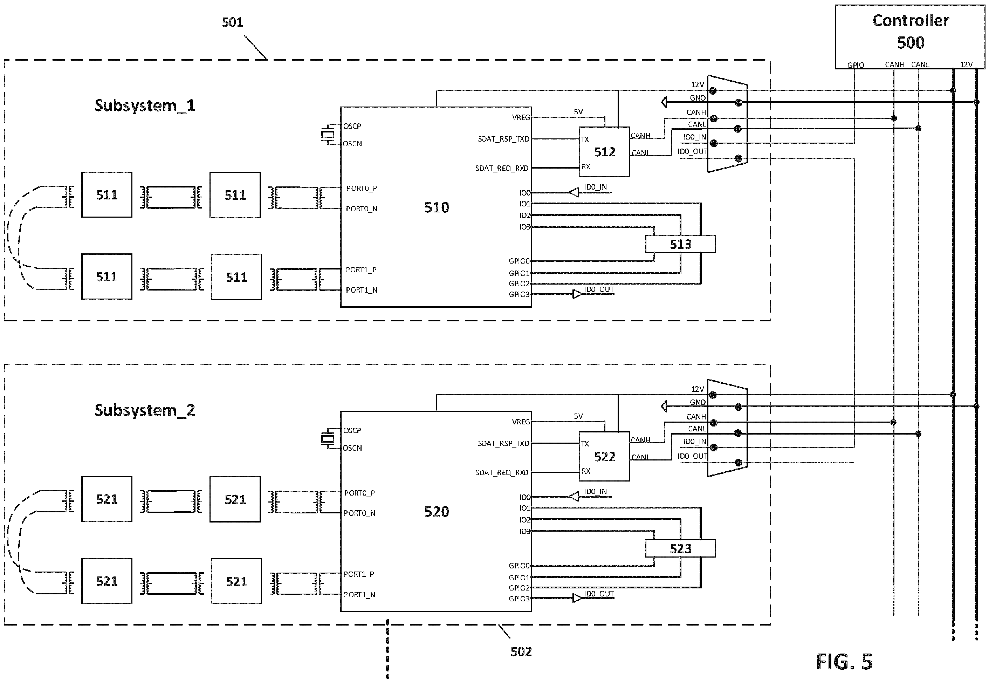

FIG. 5 is a block diagram depicting a second embodiment of the proposed system for automatic ID assignment in accordance with the present disclosure. As shown in Figure 5, the system for the automatic ID assignment solution includes multiple subsystems 501 and 502. The system includes a controller 500 to which each subsystem is connected via a CAN bus.

The controller 500 provides a 12V power supply to low voltage zones of the subsystems. The controller 500 is configured to communicate to and from each subsystem using CAN protocols. The controller 500 may be implemented by way of a Microcontroller Unit (MCU), a Microprocessor Unit (MPU) or other controller units known by the skilled person. In the embodiment illustrated in Figure 5, the controller 500 further comprises 1 GPIO terminal configured as an output of the controller.

Each subsystem comprises a device (e.g., 510, 520), a transceiver (e.g., 512, 522), a latch (e.g., 513, 523), and one or more analog front ends (AFEs) (e.g., 511, 521). The device is typically implemented as a gateway or a transceiver, and is in need of being assigned with a corresponding unique ID when the system initiates.

The AFEs 511 and 521 may include battery monitoring modules having monitor chips for sensing the voltage and temperature of battery cells, e.g., in electric vehicles or industrial level energy storage systems. The AFEs 511, 521 are configured to communicate with the device 510, 520 by daisy chain. As shown in Figure 5, the AFEs 511, 521 are arranged in a connection as a loop back daisy chain. Other possible connection relationships between the AFEs and the device, such as single daisy chain, etc., are also applicable, as will be familiar to the skilled person, and are intended to be encompassed within the present disclosure.

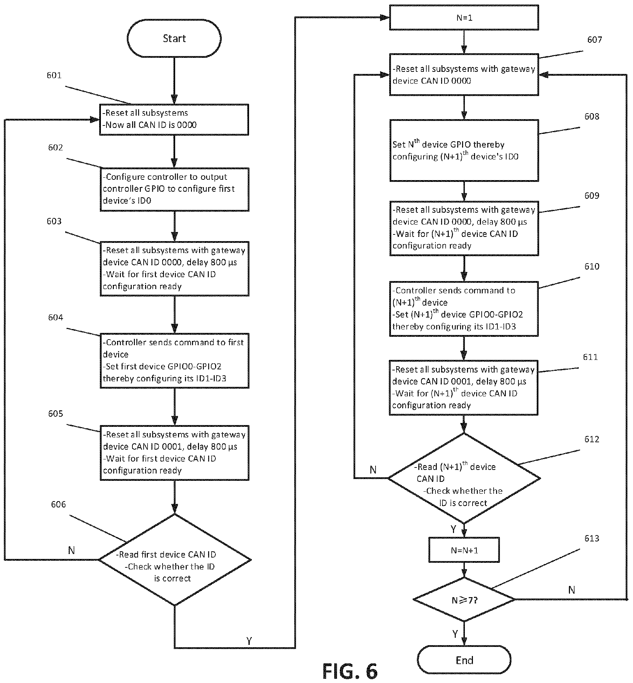

The gateway device 510 comprises 4 daisy chain communication ports to connect with the AFEs 511. In the embodiment illustrated in Figure 5, the gateway device 510 further comprises 4 General Purpose Input/Output (GPIO) terminals and 4 ID ports. The 1 GPIO terminal of the controller 500 is configured to output signals to the ID port ID0 of the gateway device 510. The 4 ID ports ID0-ID3 are configured for receiving a 4-bit signal with each carrying one bit when used in CAN ID assignment. The CAN ID length of the gateway device 510 is thus 4 bits. The assigned CAN ID can be stored in a register of the gateway device by retrieving data from the ID ports. The skilled person will appreciate that, in conventional CAN devices, such ID ports may be connected to "DIP" switches, which can be manually set so as to assign a CAN ID to the device when the device is installed in a system. In embodiments of the present disclosure, however, the ID ports are connected differently: in particular according to the embodiment shown in Figure 5, 3 GPIO terminals GPIO0-GPIO2 of the gateway device 510 are configured as outputs and are used for configuring the ID ports ID1 to ID3 for the gateway device 510 itself through a latch 513, and 1 GPIO terminal of the gateway device 510 is configured as an output and is used for configuring the ID port ID0 for the gateway device 520 of a next subsystem 502. A 5V signal from a GPIO terminal to a respective ID port characterizes the change of logic from "0" to "1" at the respective ID port, as will be described in more details with reference to Figure 6. In this embodiment, the 5V signal need not be permanent and constant, since the latch may be configured to "hold" the signals already supplied - for example while the gateway device is being reset, under command of the controller. It is envisioned that the GPIO terminals and the ID ports may, in some embodiments, be useable for additional purposes other than the described CAN ID assignment purpose.

The gateway device 510 communicates with the controller 500 via CAN bus by way of the transceiver 512. As shown, a 5MHz external crystal oscillator may be provided for the gateway device 510 to support its communication through the CAN bus. The transceiver 512 is a CAN signal transceiver, which is configured to output CAN_HIGH (CANH) and CAN_LOW (CANL) signals. The differential voltage on the pair of CANH and CANL signal characterizes the logic signal from the controller to the gateway device. It is envisioned that the transceiver 512 can either be a separate chip or embedded in the gateway device 510.

It will be appreciated that the system of FIG. 5 may include more subsystems, depending on an allowable number as defined by the length of the CAN ID which is assigned from the controller 500.

FIG. 6 is a flow chart describing a method of automatic ID assignment for CAN bus devices in accordance with the second embodiment of the present disclosure. The method will be described with reference to the system of FIG. 5. This embodiment is similar to the embodiment described above with reference to Figure 4. One notable difference, though, is that in this embodiment the controller 500 does not require to have multiple GPIO terminals connected to the devices or subsystems on the CAN bus. Instead, according to this embodiment, the controller outputs a single bit, on a single GPIO terminal to the first subsystem 501, commanding the first gateway device 510 to set its ID as a transitional ID. Thus, the first gateway device 510 only uses a single ID port to receive the command. Similarly, the first gateway device 510 only uses a single GPIO terminal to connect to one single ID port of the second gateway device 520. Another difference from the first embodiment is that, in this embodiment, an "intermediate" CAN ID (which is the same "0001" in each case) is sequentially assigned to each device, prior to assigning a final CAN ID to that device,

All systems are initiated at the beginning, including all subsystems, the controller 500 and other modules are powered on. At step 601, reset all subsystems 501 and 502. The CAN IDs, i.e., ports ID0 to ID3 of all the gateway devices are set to "0000". In the second embodiment, the controller 500 sends CAN signals to all the subsystems on the CAN bus, to reset these subsystems, when the system is powered on.

At step 602, the (single) GPIO terminal of the controller 500 outputs a signal to the first subsystem 501. The controller GPIO terminal outputs a signal ID0_IN to the first subsystem 501 to configure the port ID0 of the first gateway device 510 from "0" to "1", thus ID of the first gateway device is ready to be set from "0000" to "0001".

As shown in Figure 5, one possible implementation is using 1 wire to directly connect between the controller GPIO terminal and the ID port ID0 of the first gateway device 510. In this manner, changing the signal level on the pin of the ID port via the wire will result in the change of value of the ID port. As described, the 5V signal from the controller GPIO terminal to the respective ID port characterizes the change of logic from "0" to "1". It is envisioned that other possible GPIO signaling methods could be used.

At step 603, the controller 500 sends CAN signals to those subsystems with gateway device CAN ID "0000", to reset these subsystems. As already mentioned, for a typical gateway device, a reset action is needed for updating its CAN ID, from the values at the ID ports. A delay time (which for some implementation may be at least 800µs) is introduced to meet the minimum demands of resetting a typical gateway device. If the gateway device loses power supply, then it will lose its configured ID and reset its ID to "0000" (or whatever value may then exist across its ID ports). At step 603, it may include a further wait time, or delay, until configuration of the CAN ID of the first gateway device to "0001" is ready and finished.

At step 604, the controller sends CAN signals to the subsystem with gateway device CAN ID "0001", instructing the gateway device to output signals from its GPIO0 to GPIO2 to respectively configure its port ID3 to ID1 of the gateway device from "000" to "001". As shown in Figure 5, the controller 500 sends CAN signals to the first subsystem 501, to instruct GPIO2 of the first gateway device 510 to configure the port ID1 of the first gateway device to "1", to instruct GPIO1 of the first gateway device to configure the port ID2 of the first gateway device to "0" and instruct GPIO0 of the first gateway device to configure the port ID3 of the first gateway device to "0". Thus, the CAN ID of the first gateway device is ready to be set from "0001" to "0011".

At step 605, controller sends CAN signals to those subsystems with gateway device CAN ID "0001", to reset these subsystems. At step 605, waiting until configuring CAN ID of the first gateway device to "0011" is ready and finished. By way of the latch 513, the ports ID1 to ID3 of the first gateway device 510 can respectively maintain its value as "1", "0" and "0" after resetting the first subsystem 501.

At step 606, the CAN ID of the first gateway device 510 is read to check whether the ID configured in step 605 is correct. That is to say, the current CAN ID of the first gateway device 510, which should now be "0011", is checked with device IDs of any other gateway device of each subsystem. As a preferred implementation, the controller requests all the gateway devices to return their IDs and check whether the current CAN ID of the first gateway device is identical with any previously configured ID. It is envisioned that other duplicate ID checking method can also be applicable to the solution. If ID "0011" is already used, i.e., identical to any other device ID, due to the reason such as failure of resetting some subsystems at the beginning, etc., the method will loop back to step 601, where CAN ID of all gateway devices will be reset to "0000" and the system will restart the automatic ID assignment process.

If, with step 606, the current CAN ID "0011" of the first gateway device 510 is correct, the method proceeds on to a loop procedure for assigning CAN IDs for the other gateway devices. The count will start at N=1 as ID of the first gateway device has already been assigned.

At step 607, the controller sends CAN signals to those subsystems with gateway device CAN ID "0000", to reset these subsystems.

At step 608, the controller sends CAN signals to the first gateway device 510, whose CAN ID is already assigned as "0011", instructing the first gateway device 510 to output signal ID0_OUT from its GPIO3, to the second subsystem 502, to configure port ID0 of the second gateway device 520 from "0" to "1", thus ID of the second gateway device is ready to be set from "0000" to "0001". As shown in Figure 5, in the implementation of the embodiment, this is done using 1 wire to directly connect GPIO3 of the first gateway device 510 and port ID0 of the second gateway device 520. It is envisioned that other possible GPIO signaling methods can be applicable.

At step 609, controller sends CAN signals to those subsystems with gateway device CAN ID "0000", to reset these subsystems. A delay (typically of a minimum of 800µs) is introduced. For step 609, the second subsystem waits until the configuration of CAN ID of the second gateway device 520 to "0001" is finished.

At step 610, the controller sends CAN signals to the subsystem with gateway device CAN ID "0001", instructing the gateway device to output signals from its GPIO0 to GPIO2 to respectively configure its port ID3 to ID1 of the gateway device from "000" to "010". As shown in Figure 5, the controller 500 sends CAN signals to the second subsystem 502, to instruct GPIO2 of the second gateway device 520 to configure the port ID1 of the second gateway device to "0", to instruct GPIO1 of the second gateway device to configure the port ID2 of the second gateway device to "1" and instruct GPIO0 of the second gateway device to configure the port ID3 of the second gateway device to "0". Thus, the CAN ID of the second gateway device is ready to be set from "0001" to "0101".

At step 611, the controller sends CAN signals to those subsystems with gateway device CAN ID "0001", to reset these subsystems. A delay (typically of a minimum of 800µs) is introduced. At step 611, waiting until configuring CAN ID of the second gateway device to "0101" is ready and finished. By way of the latch 523, the ports ID1 to ID3 of the second gateway device 520 can respectively maintain its value as "0", "1" and "0" after resetting the second subsystem 502.

At step 612, the CAN ID of the second (or more generally, the "(N+1)^{th}") gateway device is retrieved (or read out) to check whether the CAN ID configured in step 611 is correct. That is to say, for the first time in the loop, the current CAN ID of the second gateway device 520, which should now be "0101", is checked against device IDs of any other gateway device of each subsystem. As a preferred implementation, the controller requests all the gateway devices to return their IDs and check whether the current CAN ID of the second gateway device is identical with any previously configured ID. It is envisioned that other duplicate ID checking method can also be applicable to the solution. If ID "0101" is already used, i.e., identical to any other device ID, due to the reason such as failure of resetting some subsystems at the beginning, etc., the method will loop back to step 607, where the controller sends CAN signals to all the subsystems, whose gateway device CAN ID is currently "0000", to reset these subsystems. Then CAN ID of the second gateway device 520 will be configured again from step 408 as described above.

At step 612, if ID "0101" of the second gateway device 520 is determined to be correct, the count N is incremented, and the method proceeds to step 613. At step 613, it is determined whether the count N has reached a threshold value, which may be preconfigured as 7 as shown in Figure 6. If the count N is smaller than the threshold value, the method will loop back to step 607, where the controller 500 sends CAN signals to those subsystems with gateway device CAN ID "0000", to reset these subsystems. CAN ID of the (N+1)^{th} gateway device will be configured from the GPIO terminal of the N^{th} gateway device. If the count N reaches the threshold value, the method ends, which means, in the case that the threshold is 7, ID "1111" has been assigned to the last gateway device of the last subsystem and gateway devices of all the 7 subsystems have been assigned a respective CAN ID from "0011" to "1111".

It should be noted that the number of GPIO terminals and ID ports introduced, the number of gateway devices (subsystems) to be assigned ID, and the combination of ID values, may each be determined by user selection or by a system designer.

In the embodiment illustrated in Figure 5, 4 ID ports are introduced in the solution for each gateway device which means the CAN ID length of the gateway device is 4 bits. 3 GPIO terminals are introduced in the solution for each gateway device to configure its own 3 ID ports, i.e., ID1 to ID3. This means the maximum allowable number of gateway devices (subsystems) should be 7. Ports ID3 to ID1 for the gateway devices of the 7 subsystems should be configured from "001" to "111" as ID 0001 should be kept as a transitional ID value for all the gateway devices before the controller sending CAN signals to each subsystem to instruct the gateway device of the each subsystem to configure its own 3 ID ports, i.e., ID1 to ID3. However, a different number of GPIO terminals and ID ports will result in a different number of bits of the CAN ID length. That means, a number of more than 7 subsystems is also applicable. For example, 5 GPIO terminals and 5 ID ports in the gateway devices in the second embodiment of FIG. 5 will allow a maximum number of 15 subsystems in the system for automatic ID assignment.

Also, although 7 is preconfigured as the threshold value of the count N for the solution in the second embodiment, any number less than 7 is applicable for the solution when 4 GPIO terminals and 4 ID ports are introduced in the solution.

Although ID from "0011" to "1111" is preconfigured as the CAN ID of the gateway devices for the solution in the second embodiment, any group of ID number matching the threshold value of the count N is applicable for the solution. For example, if 3 subsystems are present for ID assignment, (0101, 0111, 1111) is a possible ID combination. If 5 subsystems are present for ID assignment, (0011, 0101, 1001, 1011, 1111) is a possible ID combination.

It should also be noted that, in the second embodiment, although only 3 GPIO terminals are introduced in the solution for each gateway device to configure its own 3 ID ports, it is envisioned that configuring the value on the fourth ID port (which is ID port ID0 described in the second embodiment), for example, adding a switch function at the fourth ID port, will allow more CAN IDs to be assigned. This means the maximum allowable number of subsystems will become 14 in the second embodiment as ID "0010", "0100", "0110", "1000", "1010", "1100" and "1110" will also be applicable.

Comparing with the first embodiment of the proposed automatic ID assignment solution in accordance with the present disclosure, the second embodiment of the proposed solution utilizes fewer wires between the controller and the first gateway device and fewer wires between two gateway devices. Also, comparing with the first embodiment, the size of any pin terminal which may be implemented, as shown, as part of the sub-systems 501, 502, etc., is smaller in the second embodiment. This will further save cost and decrease design complexity for the proposed solution.

The use of the terms 'a', 'an', `the' and similar referents in the context of describing the subject matter (particularly in the context of the following claims) are to be construed to cover both the singular and the plural, unless otherwise indicated herein or clearly contradicted by context. Recitation of ranges of values herein are intended merely to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims set forth hereinafter together with any equivalents thereof entitled to. The use of any and all examples, or exemplary language (e.g., 'such as') provided herein, is intended merely to better illustrate the subject matter and does not pose a limitation on the scope of the subject matter unless otherwise claimed. The use of the term 'based on' and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A method of assigning a respective controller area network (CAN) ID to each of a plurality of devices, wherein the each of the plurality of devices is coupled with a CAN bus and comprises at least one input and at least one output by which the plurality of devices are connected, in a chain, to a controller of the CAN bus having at least one output, the method comprising:
resetting the CAN ID of the each of the plurality of devices to a same initial value;
using the at least one output of the controller to set the at least one input of a first device of the plurality of devices to a first value;
using the first value to set the CAN ID of the first device;
using the at least one output of the first device to set the at least one input of a second device of the plurality of devices to a second value, wherein the second device is connected to the first device; and
using the second value to set the CAN ID of the second device.

2. The method of claim 1, wherein the second value is different from the first value.

3. The method of claim 1 or 2, wherein setting the CAN ID of the first device and setting the CAN ID of the second device each further comprises the controller instructing any devices having the same initial value of CAN ID to reset.

4. The method of any of the preceding claims, wherein the at least one input of the each of the plurality of devices is a respective plurality of M ID ports configured to receive an M-bit value corresponding to a binary value at each ID port, the at least one output of the each of the plurality of devices is a respective plurality of M general-purpose input/output (GPIO) terminals configured to output an M-bit value corresponding to a binary value at each GPIO terminal, and
wherein, using the at least one output of the first device to set the at least one input of a second device of the plurality of devices to a second value comprises the controller instructing the first device to output, at the M GPIO terminals, a value which is one greater than the value of the CAN ID of the first device.

5. The method of claim 4, further comprising setting the CAN ID of an (N+1)^{th} device along the chain comprises the controller instructing the N^{th} device along the chain to output, at the M GPIO terminals of the N^{th} device, a value which is one greater than the value of the CAN ID of the N^{th} device.

6. The method of any of the preceding claims, wherein the at least one input is a first input and the at least one output is a first output, and wherein the each of the plurality of devices comprises a plurality of further outputs and a plurality of further inputs, and each of the plurality of further outputs is electrically connected to a respective one of the plurality of further inputs.

7. The method of claim 6, wherein
setting the CAN ID of the first device further comprises:
after using the at least one output of the controller to set the at least one input of a first device of the plurality of devices to a first value, the controller instructing any devices having the same initial value of CAN ID to reset,
the controller instructing any devices having the first value of the first input to output a third value at its plurality of further outputs, thereby applying the third value to its plurality of further inputs, and
the controller instructing any devices having the first value of the first input to reset; and
setting the CAN ID of the second device comprises:
after using the at least one output of the first device to set the at least one input of a second device of the plurality of devices to a second value, the controller instructing any devices having the same initial value of CAN ID to reset,
the controller instructing any devices having the second value of the first input to output a fourth value at its plurality of further outputs, thereby applying the fourth value to its plurality of further inputs, and
the controller instructing any devices having the second value of the first input to reset.

8. The method of claim 7, the second value is equal to the first value, and wherein the fourth value is different from the third value.

9. The method of claim 6, wherein each of the plurality of further outputs is connected to a respective one of the plurality of further inputs by way of a latch.

10. A system of assigning a respective controller area network (CAN) ID to each of a plurality of devices, the system comprising:
the each of the plurality of devices being coupled with a CAN bus; and
a controller of the CAN bus having at least one output, wherein the each of the plurality of devices comprises at least one input and at least one output by which the plurality of devices are connected, in a chain, to the controller;
wherein the CAN ID of the each of the plurality of devices is reset to a same initial value after the system is powered on;
wherein the at least one output of the controller is used to set the at least one input of a first device of the plurality of devices to a first value, and the first value is used to set the CAN ID of the first device;
wherein the at least one output of the first device is used to set the at least one input of a second device of the plurality of devices to a second value, and the second value is used to set the CAN ID of the second device, wherein the second device is connected to the first device.
The system of claim 12, wherein the at least one input of the each of the plurality of devices is configured as a CAN ID port.

11. The system of claim 10, wherein setting the CAN ID of the first device and setting the CAN ID of the second device each further comprises the controller instructing any devices having the same initial value of CAN ID to reset.

12. The system of claim 10 or 11, wherein the at least one input of the each of the plurality of devices is a respective plurality of M ID ports configured to receive an M-bit value corresponding to a binary value at each ID port, the at least one output of the each of the plurality of devices is a respective plurality of M general-purpose input/output (GPIO) terminals configured to output an M-bit value corresponding to a binary value at each GPIO terminal, and
wherein, setting the at least one input of a second device of the plurality of devices to a second value comprises the controller instructing the first device to output, at the M GPIO terminals, a value which is one greater than the value of the CAN ID of the first device.

13. The system of claim 12, wherein the CAN ID of an (N+1)^{th} device along the chain is set by the controller instructing the N^{th} device along the chain to output, at the M GPIO terminals of the N^{th} device, a value which is one greater than the value of the CAN ID of the N^{th} device.

14. The system of any of the preceding claims 10 to 13, wherein the at least one input is a first input and the at least one output is a first output, and wherein the each of the plurality of devices comprises a plurality of further outputs and a plurality of further inputs, and each of the plurality of further outputs is electrically connected to a respective one of the plurality of further inputs.

15. The system of claim 14, wherein
setting the CAN ID of the first device further comprises:
after using the at least one output of the controller to set the at least one input of a first device of the plurality of devices to a first value, the controller instructing any devices having the same initial value of CAN ID to reset,
the controller instructing any devices having the first value of the first input to output a third value at its plurality of further outputs, thereby applying the third value to its plurality of further inputs, and
the controller instructing any devices having the first value of the first input to reset; and
setting the CAN ID of the second device comprises:
after using the at least one output of the first device to set the at least one input of a second device of the plurality of devices to a second value, the controller instructing any devices having the same initial value of CAN ID to reset,
the controller instructing any devices having the second value of the first input to output a fourth value at its plurality of further outputs, thereby applying the fourth value to its plurality of further inputs, and
the controller instructing any devices having the second value of the first input to reset.
